# FASCICULE DE BREVET EUROPEEN

(11) **EP 4 159 321 B1**
(45) Date de publication et mention de la délivrance du brevet: **17.04.2024**
(21) Numéro de dépôt: 22198247.3
(22) Date de dépôt: 28.09.2022
(51) Int. Cl.: B05B 15/16, B05B 15/62, B25J 11/00, B25J 15/00, F16B 39/24, B05B 13/04

(54) **DISPOSITIF DE FIXATION DE PULVÉRISATEUR SUR UN BRAS ROBOTISÉ**
VORRICHTUNG ZUR BEFESTIGUNG EINES ZERSTÄUBERS AN EINEM ROBOTERARM
DEVICE FOR ATTACHING A SPRAYER TO A ROBOT ARM

(30) Priorité: 29.09.2021 FR 2110294
(43) Date de publication de la demande: 05.04.2023
(73) Titulaire: Exel Industries, 51200 Epernay (FR)
(72) Inventeur: TARANTINI, Joseph, 38660 LA TERRASSE (FR); PERINET, Sylvain, 74210 GIEZ (FR)
(74) Mandataire: Lavoix

(56) Documents cités:
- EP-A1- 0 670 448
- EP-A1- 3 222 360
- US-B2- 7 056 387

## Description

### DOMAINE TECHNIQUE

L'invention concerne le domaine technique général des appareils de pulvérisation pour le revêtement de produits, typiquement des robots permettant de peindre, d'enduire ou de laquer des produits.

### ÉTAT DE LA TECHNIQUE

Classiquement, dans des lignes de production de grande série, les opérations d'enduction, de revêtement ou de peinture sont réalisées au moyen d'appareils de pulvérisation montés sur des bras robotisés. Un pulvérisateur est fixé à l'extrémité d'un bras robotisé configuré pour déplacer le pulvérisateur au cours d'une étape d'enduction d'une pièce, afin de recouvrir les surfaces de la pièce qui doivent l'être.

Classiquement, ces pulvérisateurs sont fixés de manière démontable au bras de robot de manière à pouvoir effectuer des opérations de maintenance ou un changement de pulvérisateur. Des dispositifs de fixation de pulvérisateurs bien connus proposent donc des assemblages utilisant des ensemble vissés, ou filetage-taraudage, qui permettent d'obtenir des assemblages démontables présentant une conception simple.

Les opérations de maintenance ou de changement de pulvérisateur impliquant nécessairement l'arrêt du robot, il est avantageux de limiter au maximum le temps de démontage du pulvérisateur, et donc de limiter le nombre d'ensembles vissés permettant de fixer le pulvérisateur au bras robot. En outre, en milieu de pulvérisation de peinture, des particules de peinture en suspension peuvent s'accumuler sur les surfaces exposées au milieu extérieur, et encrasser les éléments exposés. Il est donc particulièrement intéressant de ne laisser que des surfaces lisses exposées à l'extérieur, et de couvrir autant que possible les éléments de fixation permettant l'assemblage du pulvérisateur au bras robotisé. Des dispositifs de pulvérisation intégrant un unique écrou ont été proposés, permettant de proposer un assemblage rigide grâce à un couple de serrage important et une facilité d'utilisation permettant de limiter le temps de démontage, tout en proposant des surface externes faciles à nettoyer en encapsulant les surfaces fonctionnelles pour les isoler de l'extérieur.

Par exemple, US-A-7056387 divulgue un pulvérisateur électrostatique qui peut être monté sur un bras de robot et qui comprend un capot et un écrou vissé sur un filetage externe du bras de robot.

Toutefois, au cours des cycles d'utilisation, les vibrations provoquées par le fonctionnement du robot et du pulvérisateur sont transmises aux ensembles filetage-taraudage et provoquent le desserrement de ceux-ci, pouvant parfois mener à une désolidarisation du pulvérisateur et du bras robot.

EP-A-0670448 divulgue un dispositif de couplage rotatif qui peut être utilisé dans le cadre de l'alimentation d'un bras robot équipé d'un pulvérisateur. EP-A-3222360 divulgue un système de montage de type baïonnette qui est utilisé pour monter une jupe d'air sur un stator de turbine à air, pas pour fixer un pulvérisateur sur bras robotisé. Ceci ne permet pas de régler le problème ci-dessus.

Il existe donc un besoin d'amélioration des systèmes d'assemblage de pulvérisateurs sur les bras robots, qui soit simple et rapide d'utilisation et évite les risques de démontage à cause des vibrations.

### RÉSUMÉ DE L'INVENTION

Afin d'assurer l'assemblage d'un dispositif de pulvérisation sur un bras robot, l'invention propose un dispositif de fixation configuré pour fixer un pulvérisateur de produit pour l'enduction de pièces sur un bras robotisé, le dispositif de fixation comportant :
- un capot configuré pour être fixé à un parmi le pulvérisateur et le bras robotisé, présentant une forme sensiblement cylindrique s'étendant selon un axe longitudinal,
- un écrou monté à coulissement et à rotation sur le capot, comportant une première portion hélicoïdale, et un arrêt de capot configuré pour arrêter axialement l'écrou par rapport au capot,
- une bride configurée pour être fixée à un autre parmi le pulvérisateur et le bras robotisé, comportant une deuxième portion hélicoïdale arrangée pour coopérer avec la première portion hélicoïdale de l'écrou,

caractérisé en ce que le dispositif comporte en outre une couronne déformable montée sur l'écrou, la couronne comprenant une portion déformable et une portion annulaire, la portion annulaire présentant au moins un élément d'arrêt configuré pour interagir avec un arrêt de couronne formé sur l'écrou de manière à assurer un arrêt axial de la couronne par rapport à l'écrou,
et en ce que la bride comporte une portion d'interface agencée pour interagir avec la couronne déformable de telle manière que, lors du serrage de l'écrou de manière à verrouiller la bride au capot, la portion déformable se déforme pour interagir avec la portion d'interface de la bride pour assurer une liaison entre la bride et la couronne.

Une telle configuration permet, lorsque la liaison hélicoïdale entre l'écrou et la bride se desserre à cause des vibrations, de maintenir la liaison mécanique entre le capot et la bride grâce à la couronne. Un tel dispositif garde une grande rapidité et facilité d'utilisation tout en évitant les risques de démontage à cause des vibrations.

Optionnellement mais avantageusement, l'invention présente les caractéristiques suivantes, prises seules ou en combinaison :
- le capot présente une portion de couplage, et l'écrou comporte une deuxième portion de couplage complémentaire à la portion de couplage du capot, de manière à pouvoir sélectivement coupler en rotation selon l'axe longitudinal le capot et l'écrou ; cela permet de desserrer l'écrou en appliquant un effort de rotation sur le capot ;
- le capot présente sur une surface extérieure au moins une empreinte adaptée pour coopérer avec un outil ; cela permet d'appliquer un couple important au capot, et ainsi d'améliorer le serrage ;
- le capot présente une troisième portion hélicoïdale agencée pour interagir avec une portion complémentaire sur le bras de robot pour la fixation du dispositif sur le bras robot, la troisième portion hélicoïdale présentant un pas inversé par rapport au pas de la première portion hélicoïdale ; cela permet d'éviter le desserrage de la liaison entre le pulvérisateur et le capot lors du serrage de l'écrou ;
- le capot est agencé pour pourvoir, lors du démontage de la bride, interagir avec la portion déformable de la couronne déformable de manière à libérer la liaison entre la couronne et la bride ; cela permet, en manipulant le capot, de libérer la bride et ainsi faciliter le démontage du dispositif.
- la portion déformable de la couronne déformable présente une distribution annulaire de griffes s'étendant sensiblement longitudinalement depuis la portion annulaire de la couronne déformable en s'écartant ou se rapprochant de l'axe longitudinal, de telle manière que les extrémités des griffes définissent un cercle d'un premier diamètre, la portion d'interface de la bride définit un cercle d'un deuxième diamètre, différent du premier diamètre, le premier diamètre et le deuxième diamètre et les griffes étant configurés de telle sorte que les griffes restent dans leur domaine de déformation élastique pendant l'actionnement du dispositif ; cela permet de faciliter le montage du dispositif en évitant le besoin d'utiliser un outil, grâce à l'utilisation d'un élément déformable exerçant un effort de rappel assurant le montage ;
- le premier diamètre est inférieur au deuxième diamètre ;
- le capot comporte une première extrémité et une deuxième extrémité, et une portion de démontage agencée au niveau de la deuxième extrémité, la portion de démontage présentant une section d'un troisième diamètre configuré pour interagir avec les griffes de la couronne de manière à écarter les griffes de leur position pour libérer la portion d'interface de la bride lorsque le capot est déplacé axialement vers la bride ;
- la portion de couplage et la portion de démontage sont distantes d'une première distance axiale, et dans lequel la deuxième portion de couplage et les griffes sont distantes d'une deuxième distance axiale, la première distance axiale étant égale à la deuxième distance axiale ; cela permet, lors du démontage, d'utiliser le capot pour simultanément écarter les griffes pour libérer la bride et entraîner en rotation l'écrou pour desserrer la bride, ce qui facilite grandement le démontage du dispositif.

Selon un deuxième aspect, l'invention concerne un robot de pulvérisation comprenant un dispositif de fixation selon l'invention.

### BRÈVE DESCRIPTION DES FIGURES

D'autres caractéristiques et avantages de l'invention ressortiront clairement de la description qui en est donnée ci-dessous, à titre indicatif et nullement limitatif, en référence aux figures suivantes :
- La figure 1 est une représentation en coupe partielle des différentes pièces permettant de mettre en oeuvre un dispositif de fixation selon l'invention, qui illustre donc un capot en coupe, un écrou en coupe, une couronne déformable en coupe, une bride de fixation au robot en coupe, un châssis de pulvérisateur et un arbre interne ;
- La figure 2 est une représentation de profil des éléments composant un dispositif de fixation selon l'invention, illustrant un écrou en coupe, un capot, une couronne en coupe et une bride en coupe ;
- La figure 3 est une représentation de profil des éléments composant un dispositif de fixation selon l'invention, illustrant un écrou en coupe, un capot, une couronne en coupe, une bride en coupe et un arbre interne ;
- La figure 4 est une représentation de profil d'un dispositif de fixation selon l'invention, illustrant un écrou en coupe, un capot en coupe, une couronne en coupe et une bride en coupe, permettant d'illustrer un premier mode de réalisation de la couronne ;
- Les figures 5a et 5b représentent un deuxième mode de réalisation de la couronne, la figure 5a représentant une coupe partielle de la couronne de manière à détailler le profil de la couronne, la figure 5b représentant la couronne entière.

Pour plus de clarté, les éléments identiques ou similaires sont repérés par des signes de référence identiques sur l'ensemble des figures.

### DESCRIPTION DÉTAILLÉE

L'invention concerne un dispositif 1 de fixation configuré pour fixer sur un bras robotisé un pulvérisateur de produit de revêtement pour l'enduction de pièces, par exemple de la peinture, une laque, un enduit, une colle ou tout produit susceptible d'être pulvérisé.

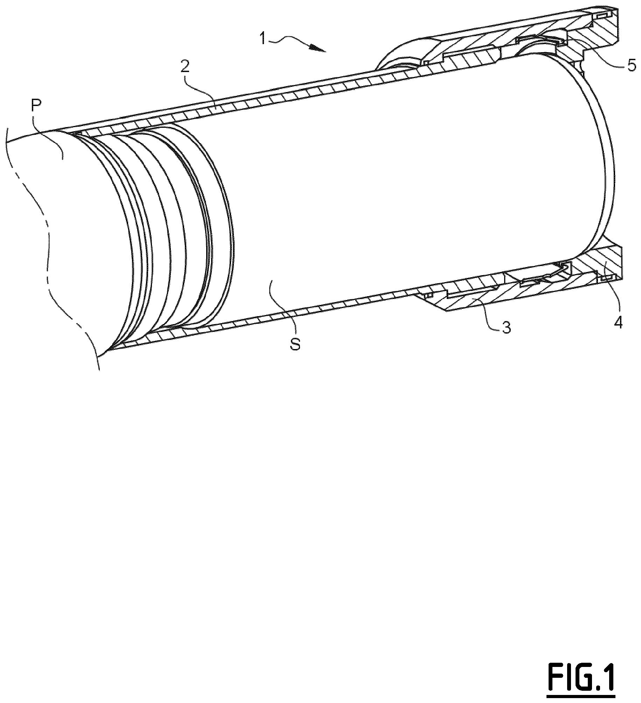

En référence à la figure 1, dans un mode de réalisation de l'invention, le dispositif 1 de fixation comporte un capot 2 fixé au pulvérisateur P, un écrou 3 pour solidariser le capot 2 et une bride 4 annulaire prévue pour la fixation sur le bras robotisé, une couronne 5 déformable. Un support S s'étend à l'intérieur du capot 2 et est lié au pulvérisateur P d'une part et la bride 4 d'autre part.

Il est évident qu'un mode de réalisation non illustré ici présente un montage inverse, et comprend un capot fixé au bras robot et une bride fixée au pulvérisateur.

Lors de la fixation du pulvérisateur P au bras robot, la bride 4 annulaire est liée au capot 2 au moyen de l'écrou 3. La couronne 5 déformable est disposée de manière à interagir avec l'écrou 3 et la bride 4 de manière à éviter la désolidarisation de la bride 4 et du capot 2 en cas de desserrage de l'écrou 3. Le capot 2 est fixé au pulvérisateur P par serrage d'une liaison vissée, et le support S est alors compressé entre le pulvérisateur P et la bride 4.

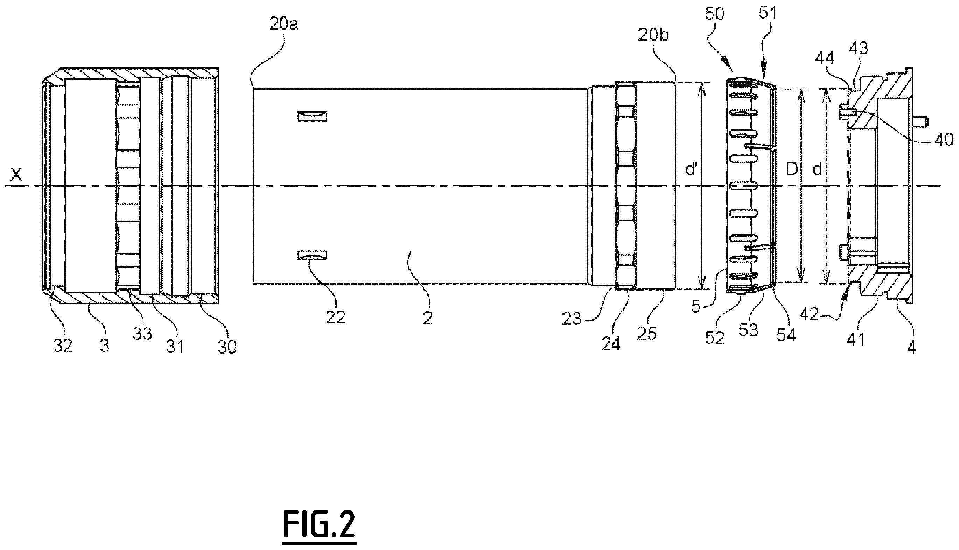

En référence à la figure 2, le capot 2 présente une forme sensiblement cylindrique s'étendant selon un axe longitudinal X entre une première extrémité 20a et une deuxième extrémité 20b. Dans cette demande, les notions de radial et de transversal sont définis par rapport à l'axe longitudinal et la géométrie cylindrique des éléments. Radialement intérieur signifie plus près de l'axe longitudinal X, et radialement extérieur signifie plus loin de l'axe longitudinal X. L'écrou 3, la bride 4 et la couronne 5 présentent une géométrie de révolution selon l'axe longitudinal X.

L'écrou 3 présente dans le mode de réalisation représenté une forme sensiblement cylindrique monté à coulissement et à rotation sur le capot 2, entourant radialement le capot 2. Il comporte une première portion hélicoïdale 30, un arrêt de couronne 31 configuré pour réaliser un arrêt axial de la couronne 5 déformable par rapport à l'écrou 3, et un arrêt de capot 32 configuré pour réaliser un arrêt axial du capot 2 par rapport à l'écrou 3. L'arrêt de capot 32 est agencé à une extrémité de l'écrou 3 opposée à la portion hélicoïdale 30. Dans le mode de réalisation représenté, l'arrêt de capot 32 comporte un épaulement s'étendant radialement vers l'intérieur de l'écrou 3.

Avantageusement, le capot 2 présente une empreinte 22 configurée pour coopérer avec un outil permettant le desserrage ou le serrage du capot 2.

La deuxième extrémité 20b du capot 2 présente un arrêt d'écrou 23 configurée pour coopérer avec l'arrêt de capot 32 de manière à assurer un arrêt axial entre l'écrou 3 et le capot 2. Dans ce mode de réalisation, l'arrêt d'écrou 23 comporte un épaulement s'étendant radialement vers l'extérieur du capot 2.

Avantageusement, le capot 2 présente une portion de couplage 24, et l'écrou 3 comporte une deuxième portion de couplage 33 complémentaire à la portion de couplage 24 du capot 2, ces portions de couplage 24, 33 étant configurées de telle manière que lorsque le capot 2 est déplacé axialement jusqu'à ce que la portion de couplage 24 et la deuxième 33 portion d'entrainement interagissent, celles-ci assurent le couplage en rotation du capot 2 et de l'écrou 3. Cela permet d'utiliser le capot 2 pour desserrer l'écrou 3 de la bride 4. C'est particulièrement intéressant lorsqu'un outil est utilisé pour entraîner le capot 2 au moyen des empreintes 22 ménagées sur le capot 2.

Dans le mode de réalisation représenté, la portion de couplage 24 et la deuxième portion de couplage 33 comportent chacune une section polygonale réalisée sur une surface respectivement du capot 2 et de l'écrou 3 qui sont destinées à être positionnées en regard l'une de l'autre. En variante, la portion de couplage 24 et la deuxième portion de couplage 33 comportent chacune une butée mécanique assurant la transmission d'un effort dans une direction tangentielle, de manière à transmettre un couple entre le capot 2 et l'écrou 3.

La portion hélicoïdale 30 est agencée à une extrémité de l'écrou 3 pour interagir avec une surface complémentaire ménagée sur la bride 4 pour assurer l'assemblage de la bride 4 à l'écrou 3. Il est entendu dans cette description, par souci de simplification, qu'une portion hélicoïdale est une portion de surface sur laquelle a été ménagée un taraudage ou un filetage, dans le but de coopérer avec une surface complémentaire pour assurer une liaison hélicoïdale de type vis-écrou.

L'arrêt de couronne 31 comprend une portée annulaire délimitée axialement par deux épaulements. Dans le mode de réalisation représenté, l'arrêt de couronne 31 est agencé sur une surface radialement interne de l'écrou 3, et la couronne 5 déformable est configurée pour être située radialement intérieurement à l'écrou 3. En variante, l'arrêt de couronne 31 comporte un pion faisant saillie dans une direction radiale depuis l'écrou 3, le pion interagissant avec un évidement réalisé dans la couronne 5 déformable pour assurer l'arrêt axial de la couronne 5 déformable par rapport au capot 2.

En variante non représentée, l'écrou 3 se situe radialement intérieurement au capot 2, la couronne 5 déformable est configurée pour être agencée radialement extérieurement à l'écrou 3 et radialement intérieurement au capot 2, et l'arrêt de couronne 31 est agencé sur surface radialement externe de l'écrou 3.

La bride 4 présente une géométrie sensiblement annulaire et comporte des éléments de centrage 40, configurée pour solidariser en rotation le support S et la bride 4. La bride 4 comporte une deuxième portion hélicoïdale 41 arrangée pour coopérer avec la première portion hélicoïdale 30 de l'écrou 1, de manière à assurer l'assemblage et le serrage de la bride 4 à l'écrou 3.

La bride 4 présente en outre une portion d'interface 42 agencée pour interagir avec la couronne 5 déformable et assurer la solidarisation de la bride 4 et la couronne 5 même en cas de desserrage entre la première 30 et la deuxième 41 portions filetées ou taraudées. Dans le mode de réalisation représenté, la portion d'interface 42 comporte une portée annulaire 43 s'étendant sensiblement axialement et une butée axiale 44 s'étendant radialement.

La couronne 5 déformable comporte une portion annulaire 50 et une portion déformable 51. La portion déformable 51 est formée d'un matériau élastique exerçant un effort de rappel lorsqu'il est déformé dans son domaine de déformation élastique. La portion annulaire 50 comporte un élément d'arrêt 52 configuré pour interagir avec l'arrêt de couronne 31 de l'écrou 3, de manière à assurer un arrêt axial de la couronne 5 déformable par rapport à l'écrou 3. Dans le mode de réalisation représenté, l'élément d'arrêt 52 comporte une pluralité de pions répartis sur le pourtour de la couronne 5, formant une pluralité de butées agencées pour s'intégrer dans la portion annulaire de l'arrêt de couronne 31 lors du montage. Une première butée de l'arrêt de couronne 31 interagit avec les éléments d'arrêt 52 de couronne, et une deuxième butée interagit avec une extrémité axiale de la couronne 5, de manière à retenir axialement la couronne 5 par rapport à l'écrou 3 dans les deux sens. En variante non représentée, l'élément d'arrêt comporte une rainure ou un évidement configuré pour coopérer avec un pion ou un obstacle réalisé sur l'écrou 3.

La portion déformable 51 comporte une distribution annulaire de griffes 53 s'étendant sensiblement longitudinalement depuis la portion annulaire 50 de la couronne déformable 5 en s'écartant ou se rapprochant de l'axe longitudinal X, de telle manière que les extrémités des griffes 53 définissent un cercle de premier diamètre D. La portion d'interface 42 de la bride 4 définit un cercle de deuxième diamètre d, différent du premier diamètre D. Ainsi, lors du montage, les griffes 53 sont déformées de manière à les écarter de leur position de repos, la bride 4 est positionnée axialement de sorte que la portion d'interface 42 et les extrémités des griffes 53 coïncident axialement, et les griffes 53 sont relâchées. L'effort de rappel exercé par les griffes 53 leur permet de revenir vers leur position initiale de manière à interagir avec la portion d'interface 42. Le rapport entre les premier D et deuxième d diamètres est configuré de telle sorte que les griffes 53 exercent un effort assurant le maintien de la bride 4 même lors du desserrage des première 30 et deuxième 41 portions filetées ou taraudées.

La longueur des griffes 53, le rapport entre le premier diamètre D et le deuxième diamètre d et le matériau de la partie déformable 51 sont configurés pour que les griffes 53 restent dans leur domaine de déformation élastique pendant l'actionnement du dispositif.

Avantageusement, les griffes 53 présentent à leur extrémité un élément de rétention 54, configurée pour renforcer le maintien en position axiale de la bride 4 par rapport à la couronne 5. Cette portion de rétention peut comprendre un obstacle, comme un pion, une butée, une griffe, ou une surface configurée pour favoriser le frottement entre la griffe 53 et la portion d'interface 42, par exemple par un profil particulier ou un couple de matériaux favorisant le frottement.

Dans le mode de réalisation représenté, les griffes 53 sont formées d'une portion de paroi définissant sensiblement une fraction angulaire de portion tronconique, et l'élément de rétention 54 est formé de la paroi constituant la griffe 53, à une extrémité de la griffe 53 opposée à la portion annulaire 50.

Le capot 2 présente, au niveau de sa deuxième extrémité 20b, une portion de démontage 25 présentant une section d'un troisième diamètre d' configuré pour interagir avec les griffes 53 de la couronne 5 de manière à écarte les griffes 53 de leur position pour libérer la portion d'interface 42 de la bride 4 lorsque le capot 2 est déplacé axialement vers la bride 4. Cela permet de démontage de la bride 4 lorsque le capot 2 est déplacé vers la bride 4.

Dans le mode de réalisation représenté, le capot 2 coulisse radialement intérieurement à la portion annulaire 50 de la couronne 5 et éloigne les griffes 53 de l'axe longitudinal X. Le troisième diamètre d'est donc configuré pour être supérieur au premier diamètre D, mais inférieur au diamètre de la portion annulaire 50 de la couronne 5.

Dans une variante dans laquelle le capot 2 coulisse radialement extérieurement à la portion annulaire 50 de la couronne 5, et rapproche donc les griffes 53 de l'axe longitudinal X, le troisième diamètre d'est donc configuré pour être inférieur au premier diamètre D, mais supérieur au diamètre de la portion annulaire 50 de la couronne 5.

La longueur des griffes 53, le rapport entre le premier diamètre D et le troisième diamètre d' et le matériau de la partie déformable 51 sont configurés pour que les griffes 53 restent dans leur domaine de déformation élastique pendant l'actionnement du dispositif 1.

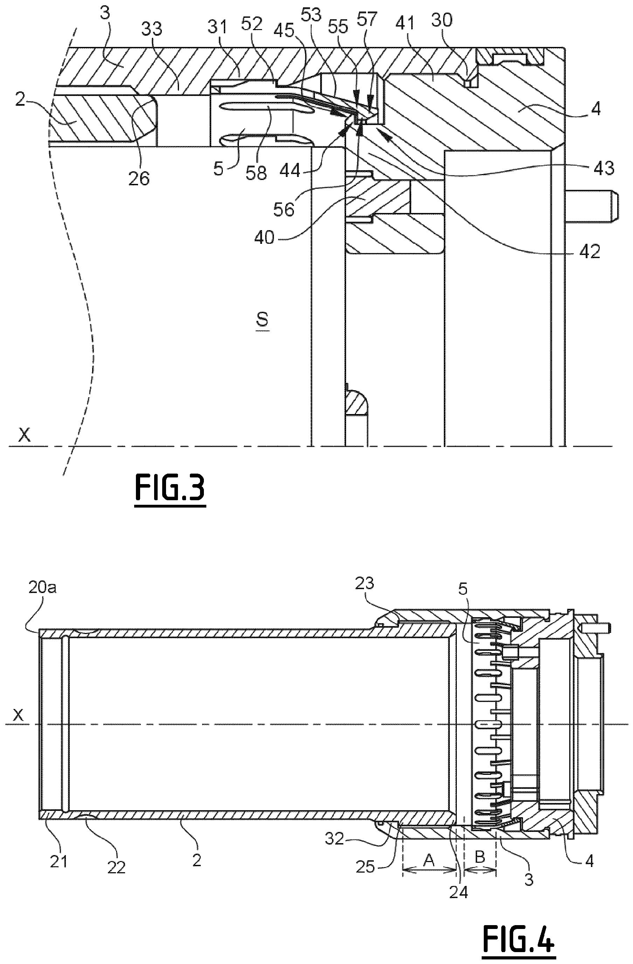

En référence à la figure 3, l'élément de rétention 54 comporte une première portion 55 s'étendant radialement, une deuxième portion 56 s'étendant sensiblement axialement depuis la première portion 55, et une troisième portion 57 s'étendant depuis la deuxième portion 56 en s'écartant ou se rapprochant de l'axe longitudinal X.

La première portion 55 est agencée pour venir au contact de la butée axiale 44 de la bride 4 et ainsi assurer un arrêt axial entre la bride 4 et la couronne 5 lorsque la bride 4 est assemblée à l'écrou 3.

La deuxième portion 56 est agencée pour venir au contact de la portée annulaire 43 et ainsi assurer une mise en position radiale entre la bride 4 et la couronne 5 lorsque la bride 4 est assemblée à l'écrou 3.

La troisième portion 57 est configurée pour faciliter le montage de la bride 4 dans la couronne 5. A cet effet, dans le mode de réalisation représenté, la deuxième portion 56 est positionnée radialement extérieurement par rapport à la portée annulaire 43, la troisième portion 57 s'étend en s'éloignant de l'axe longitudinal X. La troisième portion 57 est configurée de telle manière que son extrémité est plus éloignée de l'axe longitudinal X que la moitié du deuxième diamètre d. L'ensemble des troisièmes portions 57 forme donc un guide pour la portion d'interface 42, qui permet, lors du montage, d'écarter les griffes 53 par pression sur la bride 4, ce qui facilite grandement le montage.

La portion d'interface 42 comporté également une portion de guidage 45 configurée pour présenter une inclinaison sensiblement équivalente à celle des troisièmes portions 57, de manière, lors du montage, à écarter les griffes 57 en coopérant avec les troisièmes portions, ce qui limite les risques d'endommager les griffes 53 en les compressant au lieu de les déplacer radialement.

Dans une variante non représentée, le doigt 53 est configuré de telle manière que lors du montage la deuxième portion 56 est positionnée radialement intérieurement par rapport à la portée annulaire 43, la troisième portion 57 s'étendant en se rapprochant de l'axe longitudinal X. Dans cette variante, la troisième portion 57 est configurée de telle manière que son extrémité est plus proche de l'axe longitudinal X que la moitié du deuxième diamètre d.

Avantageusement, un ou plusieurs évidements 58, comme des rainures, des perçages ou des trous oblongs, sont ménagés à travers la couronne 5. Cela permet de réduire la raideur de la couronne 5 et augmentant sa capacité à se déformer radialement, ce qui permet de faciliter le montage de la couronne 5 sur l'écrou 3.

Avantageusement, le capot 2 présente, sur la portion de démontage 25, une arrête adoucie 26, par exemple au moyen d'un congé ou un chanfrein, pour éviter le contact entre une arrête vive et les griffes 53 lors du démontage du dispositif, et ainsi limiter l'usure des griffes 53.

En référence à la figure 4, le capot 2 présente, au niveau de sa première extrémité 20a, une troisième portion hélicoïdale 21 agencée pour interagir avec une portion complémentaire sur le pulvérisateur P pour la fixation du dispositif 1 sur le pulvérisateur P. La troisième portion hélicoïdale 21 présente un pas inversé par rapport au pas de la première portion 30 hélicoïdale. Cela permet d'éviter le desserrage de la liaison entre le pulvérisateur P et le capot 2 lors du serrage de l'écrou 3. En outre, cela facilite le démontage, puisqu'il n'est nécessaire d'entraîner le capot 2 en rotation que dans un sens pour assurer le démontage du dispositif 1.

Avantageusement, les positions axiales respectives de la portion de couplage 24, la portion de démontage 25, la deuxième portion de couplage 33, l'arrêt de couronne 31, et les griffes 53 sont toutes configurées pour permettre de positionner le capot 2 par rapport à l'écrou 3 de manière à assurer simultanément l'interaction entre la portion de couplage 24 et la deuxième portion de couplage 33 d'une part, et la portion de démontage 25 et les griffes 53 d'autre part.

Dans le mode de réalisation représenté, cela se traduit par une première distance axiale A entre la portion de couplage 24 et la portion de démontage 25 égale à une deuxième distance axiale B entre la deuxième portion de couplage 33 et les griffes 53. La deuxième distance axiale B correspond à la somme de la distance entre la deuxième portion de couplage 33 et l'arrêt de couronne 31 et la distance entre l'élément d'arrêt 52 et les griffes 53, plus précisément une section droite des griffes au niveau de laquelle la distance entre la griffe et l'axe longitudinal X est équivalente à un demi troisième diamètre d'.

Cela permet de pouvoir assurer le desserrage de la bride 4 en effectuant une unique manipulation sur le capot 2, ce qui facilite grandement l'utilisation du dispositif 1. En outre, cela permet d'isoler du milieu extérieur toutes les surfaces assurant la fixation du pulvérisateur au bras robot, ce qui limite l'encrassement.

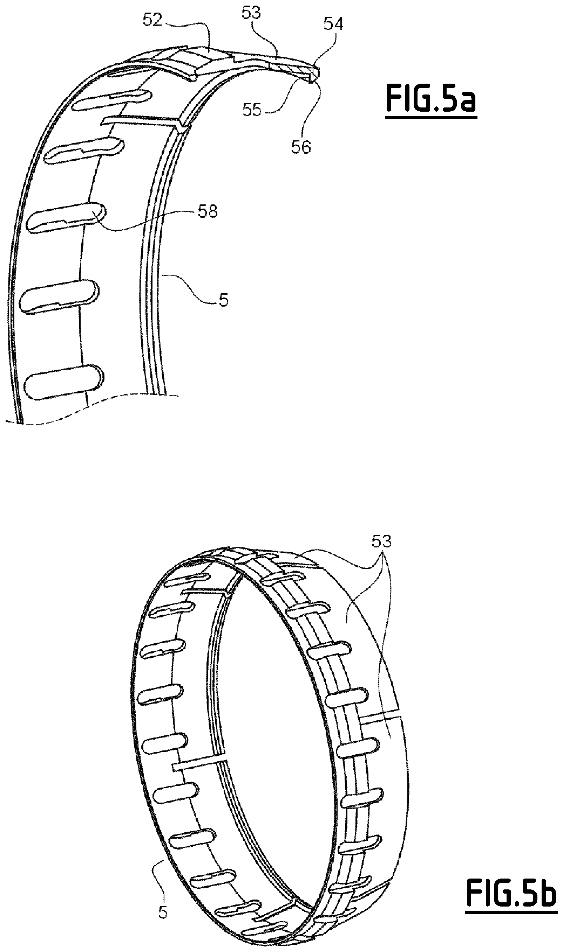

En référence aux figures 5a et 5b, la couronne 5 comporte 6 griffes 53, chacune des griffes formant une fraction angulaire de portion tronconique, les griffes 53 étant séparées les unes des autres par des rainures. Un tel mode de réalisation permet d'augmenter la rigidité de chacune des griffes par rapport à un mode de réalisation dans lequel la couronne contient plus de griffes 53, tout en préservant la mobilité des griffes 53 lorsqu'elles sont déplacées par la portion de démontage 25. Cela permet d'améliorer le maintien de la bride 4 par les griffes 53.

### Utilisation du dispositif

Lors de l'utilisation d'un tel dispositif 1 de fixation pour fixer un pulvérisateur sur un bras robotisé, l'utilisateur monte l'écrou 3 sur le capot 2 de manière à amener le capot 2 en position de butée en amenant au contact l'arrêt de capot 32 et l'arrêt d'écrou 23.

La couronne 5 est ensuite assemblée à l'écrou 3, la coopération de l'arrêt de couronne 31 et de l'élément d'arrêt 51 permettant d'assurer le maintien en position de la couronne 5 par rapport à l'écrou 3.

La bride 4 est ensuite assemblée à l'écrou 3 au moyen des portions hélicoïdales. Lors du serrage de la bride 4, les griffes 53 de la couronne 5 sont écartées de l'axe longitudinal X par l'interaction de l'élément d'interface 42 et des troisièmes portions 57, puis se referment lorsque la position axiale relative de la bride 4 et de l'écrou 3 le permet, c'est-à-dire lorsque les premières portions 55 coïncident axialement à la butée axiale 44 de la bride 4.

Un serrage en force peut être effectué en plaçant axialement le capot 2 par rapport à l'écrou 3 de telle manière que la portion de couplage 25 du capot 2 et la deuxième portion de couplage 33 coopèrent, de manière à serrer l'écrou 3 sur la bride 4 en appliquant un couple au capot 2. Un outil peut être utilisé avec les empreintes 22 du capot 2 pour appliquer un couple de serrage important.

Le capot 2 est ensuite déplacé axialement vers le pulvérisateur P pour le serrer au pulvérisateur P au moyen de la troisième portion hélicoïdale 21. Le support S maintient l'écartement axial entre la bride 4 et le pulvérisateur, ce qui permet au serrage du capot 2 d'assurer le contact entre l'arrêt d'écrou 23 et l'arrêt de capot 32, et d'assurer ainsi la fixation du pulvérisateur P au bras robotisé.

Lors du démontage du dispositif 1, le capot 2 est dévissé du pulvérisateur P puis amené dans une position axiale permettant à la fois d'écarter les griffes 53, libérant ainsi la portion d'interface 42 de la bride 4, et permettant également à la portion de couplage 25 du capot 2 et la deuxième portion de couplage 33 de coopérer. Cela permet donc de libérer la bride 4 et de desserrer l'écrou 3 en une seule manipulation.

## Revendications

1. Dispositif (1) de fixation configuré pour fixer un pulvérisateur de produit pour l'enduction de pièces sur un bras robotisé, le dispositif (1) de fixation comportant :
- un capot (2) configuré pour être fixé à un parmi le pulvérisateur et le bras robotisé, présentant une forme sensiblement cylindrique s'étendant selon un axe longitudinal (X),
- un écrou (3) monté à coulissement et à rotation sur le capot (2), comportant une première portion hélicoïdale (30), et un arrêt de capot (32) configuré pour arrêter axialement l'écrou (3) par rapport au capot (2),
- une bride (4) configurée pour être fixée à un autre parmi le pulvérisateur et le bras robotisé, comportant une deuxième portion hélicoïdale (41) arrangée pour coopérer avec la première portion hélicoïdale (30) de l'écrou (3),
**caractérisé en ce que** le dispositif (1) comporte en outre une couronne (5) déformable montée sur l'écrou (3), la couronne (5) comprenant une portion déformable (51) et une portion annulaire (50), la portion annulaire (50) présentant au moins un élément d'arrêt (52) configuré pour interagir avec un arrêt de couronne (31) formé sur l'écrou (3) de manière à assurer un arrêt axial de la couronne (5) par rapport à l'écrou (3),
et **en ce que** la bride (4) comporte une portion d'interface (42) agencée pour interagir avec la couronne (5) déformable de telle manière que, lors du serrage de l'écrou (3) de manière à verrouiller la bride (4) au capot (2), la portion déformable (51) se déforme pour interagir avec la portion d'interface (42) de la bride (4) pour assurer une liaison entre la bride (4) et la couronne (5).

2. Dispositif selon la revendication 1, dans lequel le capot (2) présente une portion de couplage (24), et l'écrou (3) comporte une deuxième portion de couplage (33) complémentaire à la portion de couplage (24) du capot (2), de manière à pouvoir sélectivement coupler en rotation selon l'axe longitudinal (X) le capot (2) et l'écrou (3).

3. Dispositif selon l'une des revendications 1 ou 2, dans lequel le capot (2) présente sur une surface extérieure au moins une empreinte (22) adaptée pour coopérer avec un outil.

4. Dispositif selon l'une des revendications 1 à 3, dans lequel le capot (2) présente une troisième portion hélicoïdale (21) agencée pour interagir avec une portion complémentaire sur le bras de robot pour la fixation du dispositif sur le bras robot, la troisième portion hélicoïdale (21) présentant un pas inversé par rapport au pas de la première portion hélicoïdale (30).

5. Dispositif selon l'une des revendications 1 à 4, dans lequel le capot (2) est agencé pour pourvoir, lors du démontage de la bride (4), interagir avec la portion déformable (51) de la couronne (5) déformable de manière à libérer la liaison entre la couronne (5) et la bride (4).

6. Dispositif selon l'une des revendications 1 à 5, dans lequel la portion déformable (51) de la couronne (5) déformable présente une distribution annulaire de griffes (53) s'étendant sensiblement longitudinalement depuis la portion annulaire (50) de la couronne (5) déformable en s'écartant ou se rapprochant de l'axe longitudinal (X), de telle manière que les extrémités des griffes (53) définissent un cercle d'un premier diamètre (D), la portion d'interface (42) de la bride (4) définit un cercle d'un deuxième diamètre (d), différent du premier diamètre (D), le premier diamètre (D) et le deuxième diamètre (d) et les griffes (53) étant configurés de telle sorte que les griffes (53) restent dans leur domaine de déformation élastique pendant l'actionnement du dispositif (1).

7. Dispositif selon la revendication 6, dans lequel le premier diamètre (D) est inférieur au deuxième diamètre (d).

8. Dispositif selon l'une des revendications 6 ou 7, dans lequel le capot (2) comporte une première extrémité (20a) et une deuxième extrémité (20b), et une portion de démontage (25) agencée au niveau de la deuxième extrémité (20b), la portion de démontage (25) présentant une section d'un troisième diamètre (d') configuré pour interagir avec les griffes (53) de la couronne (5) de manière à écarter les griffes (53) de leur position pour libérer la portion d'interface (42) de la bride (4) lorsque le capot (2) est déplacé axialement vers la bride (4).

9. Dispositif selon la revendication 8, dans lequel la portion de couplage (24) et la portion de démontage (25) sont distantes d'une première distance axiale (A), et dans lequel la deuxième portion de couplage (33) et les griffes (53) sont distantes d'une deuxième distance axiale (B), la première distance axiale (A) étant égale à la deuxième distance axiale (B).

10. Robot de pulvérisation comprenant un dispositif de fixation selon l'une des revendications 1 à 9.

## Patentansprüche

1. Befestigungsvorrichtung (1), die so konfiguriert ist, dass sie eine Sprühvorrichtung für ein Produkt zum Beschichten von Teilen an einem Roboterarm befestigt, wobei die Befestigungsvorrichtung (1) umfasst:
- eine Abdeckung (2), die so konfiguriert ist, dass sie an der Sprühvorrichtung oder am Roboterarm befestigt werden kann, und die eine im Wesentlichen zylindrische Form aufweist, die sich entlang einer Längsachse (X) erstreckt,
- eine Mutter (3), die gleitend und drehbar an der Abdeckung (2) angebracht ist und einen ersten spiralförmigen Abschnitt (30) aufweist, und einen Abdeckungsanschlag (32), der so konfiguriert ist, dass er die Mutter (3) in Bezug auf die Abdeckung (2) axial anhält,
- einen Flansch (4), der so konfiguriert ist, dass er an der Sprühvorrichtung oder am Roboterarm befestigt werden kann, und der einen zweiten schraubenförmigen Abschnitt (41) aufweist, der so angeordnet ist, dass er mit dem ersten spiralförmigen Abschnitt (30) der Mutter (3) zusammenwirkt,
**dadurch gekennzeichnet, dass** die Vorrichtung (1) ferner eine verformbare Krone (5) umfasst, die an der Mutter (3) angebracht ist, wobei die Krone (5) einen verformbaren Abschnitt (51) und einen ringförmigen Abschnitt (50) umfasst, wobei der ringförmige Abschnitt (50) mindestens ein Anschlagelement (52) aufweist, das so konfiguriert ist, dass es mit einem an der Mutter (3) ausgebildeten Kronenanschlag (31) zusammenwirkt, um eine axiale Arretierung der Krone (5) in Bezug auf die Mutter (3) zu gewährleisten,
und dass der Flansch (4) einen Schnittstellenabschnitt (42) aufweist, der so angeordnet ist, dass er mit der verformbaren Krone (5) derart zusammenwirkt, um beim Festziehen der Mutter (3) den Flansch (4) an der Abdeckung (2) zu verriegeln, der verformbare Abschnitt (51) sich verformt, um mit dem Schnittstellenabschnitt (42) des Flansches (4) zusammenzuwirken, um eine Verbindung zwischen dem Flansch (4) und der Krone (5) zu gewährleisten.

2. Vorrichtung nach Anspruch 1, bei der die Abdeckung (2) einen Kupplungsabschnitt (24) und die Mutter (3) einen zweiten Kupplungsabschnitt (33) komplementär zu dem Kupplungsabschnitt (24) der Abdeckung (2) aufweist, so dass die Abdeckung (2) und die Mutter (3) selektiv in der Lage sind, in Drehung entlang der Längsachse (X) zu koppeln.

3. Vorrichtung nach einem der Ansprüche 1 oder 2, wobei die Abdeckung (2) auf einer Außenfläche mindestens eine Vertiefung (22) aufweist, die dazu geeignet ist, mit einem Werkzeug zusammenzuwirken.

4. Vorrichtung nach einem der Ansprüche 1 bis 3, wobei die Abdeckung (2) einen dritten spiralförmigen Abschnitt (21) aufweist, der so angeordnet ist, dass er mit einem komplementären Abschnitt auf dem Roboterarm zur Befestigung der Vorrichtung auf dem Roboterarm zusammenwirkt, wobei der dritte spiralförmige Abschnitt (21) eine Steigung aufweist, die in Bezug auf die Steigung des ersten spiralförmigen Abschnitts (30) umgekehrt ist.

5. Vorrichtung nach einem der Ansprüche 1 bis 4, wobei die Abdeckung (2) so angeordnet ist, dass sie beim Abnehmen des Flansches (4) mit dem verformbaren Abschnitt (51) der verformbaren Krone (5) zusammenwirken kann, um die Verbindung zwischen der Krone (5) und dem Flansch (4) zu lösen.

6. Vorrichtung nach einem der Ansprüche 1 bis 5, wobei der verformbare Abschnitt (51) der verformbaren Krone (5) eine ringförmige Verteilung von Klauen (53) aufweist, die im Wesentlichen in Längsrichtung vom ringförmigen Abschnitts (50) des verformbaren Kranzes (5) in einer Richtung von der Längsachse (X) weg oder zu dieser hin verlaufen, wobei die Enden der Klauen (53) einen Kreis mit einem ersten Durchmesser (D) definieren, wobei der Schnittstellenabschnitt (42) des Flanschs (4) einen Kreis mit einem zweiten Durchmesser (d) definiert, der sich von dem ersten Durchmesser (D) unterscheidet, wobei der erste Durchmesser (D) und der zweite Durchmesser (d) und die Klauen (53) so konfiguriert sind, dass die Klauen (53) während der Betätigung der Vorrichtung (1 ) in ihrem Bereich der elastischen Verformung bleiben.

7. Vorrichtung nach Anspruch 6, wobei der erste Durchmesser (D) kleiner als der zweite Durchmesser (d) ist.

8. Vorrichtung nach einem der Ansprüche 6 oder 7, wobei die Abdeckung (2) ein erstes Ende (20a) und ein zweites Ende (20b) aufweist und einen Demontageabschnitt (25), der an dem zweiten Ende (20b) angeordnet ist, wobei der Demontageabschnitt (25) einen Abschnitt mit einem dritten Durchmesser (d') aufweist, der so konfiguriert ist, dass er mit den Klauen (53) der Krone (5) zusammenwirkt, um die Klauen (53) aus ihrer Position wegzudrücken, um den Schnittstellenabschnitt (42) vom Flansch (4) zu lösen, wenn die Abdeckung (2) axial in Richtung des Flansches (4) verschoben wird.

9. Vorrichtung nach Anspruch 8, wobei der Kupplungsabschnitt (24) und der Demontageabschnitt (25) in einem ersten axialen Abstand (A) voneinander beabstandet sind, und wobei der zweite Kupplungsabschnitt (33) und die Klauen (53) um einen zweiten axialen Abstand (B) voneinander beabstandet sind, wobei der erste axiale Abstand (A) gleich dem zweiten axialen Abstand (B) ist.

10. Spritzroboter mit einer Befestigungsvorrichtung nach einem der Ansprüche 1 bis 9.

## Claims

1. An attachment device (1) configured for attaching onto a robotic arm, a sprayer for products for coating workpieces, the attachment device (1) including:
- a cover (2) configured to be attached to one amongst the sprayer and the robotic arm, having a substantially cylindrical shape extending along a longitudinal axis (X),
- a nut (3) mounted, with a possibility to side and rotate, on the cover (2), having a first helical portion (30), and a cover stop (32) configured to axially stop the nut (3) relative to the cover (2),
- a flange (4) configured for being attached to another amongst the sprayer and the robotic arm, including a second helical portion (41) arranged for mating with the first helical portion (30) of the nut (3),
**characterized in that** the device (1) further includes a deformable ring (5) mounted on the nut (3), the ring (5) comprising a deformable portion (51) and an annular portion (50), the annular portion (50) having at least one stop member (52) configured for interacting with a ring stop (31) formed on the nut (3), so as to provide an axial stop of the ring (5) with respect to the nut (3),
and **in that** the flange (4) includes a interfacing portion (42) arranged for interacting with the deformable ring (5) in such a way that, when tightening the nut (3) for locking the flange (4) onto the cover (2), the deformable portion (51) is deformed so as to interact with the interfacing portion (42) of the flange (4) so as to provide a connection between the flange (4) and the ring (5).

2. The device according to claim 1, wherein the cover (2) has a coupling portion (24), and the nut (3) has a second coupling portion (33) matching the coupling portion (24) of the cover (2), so as to be apt to selectively rotationally couple the cover (2) and the nut (3), along the longitudinal axis (X).

3. The device according to one of claims 1 or 2, wherein the cover (2) has, on an outer surface, at least one recess (22) suitable for mating with a tool.

4. The device according to one of claims 1 to 3, wherein the cover (2) has a third helical portion (21) arranged for interacting with a matching portion on the robot arm, for attaching the device onto the robot arm, the third helical portion (21) having an inverse pitch with respect to the pitch of the first helical portion (30).

5. The device according to one of claims 1 to 4, wherein the cover (2) is arranged for being apt to interact, during the disassembly of the flange (4), with the deformable portion (51) of the deformable ring (5) so as to release the connection between the ring (5) and the flange (4).

6. The device according to one of claims 1 to 5, wherein the deformable portion (51) of the deformable ring (5) has an annular distribution of claws (53) extending substantially longitudinally from the annular portion (50) of the deformable ring (5) either away from or towards the longitudinal axis (X), in such a way that the ends of the claws (53) define a circle with a first diameter (D), the interfacing portion (42) of the flange (4) defining a circle with a second diameter (d) different from the first diameter (D), the first diameter (D) and the second diameter (d) and the claws (53) being configured in such a way that the claws (53) remain in the elastic deformation range thereof during actuation of the device (1).

7. The device according to claim 6, wherein the first diameter (D) is smaller than the second diameter (d).

8. The device according to one of claims 6 or 7, wherein the cover (2) includes a first end (20a) and a second end (20b), and a disassembly portion (25) arranged at the second end (20b), the disassembly portion (25) having a section with a third diameter (d') configured for interacting with the claws (53) of the ring (5) so as to move the claws (53) away from the position thereof so as to release the interfacing portion (42) from the flange (4) when the cover (2) is axially displaced towards the flange (4).

9. The device of claim 8, wherein the coupling portion (24) and the disassembly portion (25) are spaced away by a first axial distance (A), and wherein the second coupling portion (33) and the claws (53) are spaced away by a second axial distance (B), the first axial distance (A) being equal to the second axial distance (B).

10. A sprayer robot comprising an attachment device according to any of claims 1 to 9.
